(19) Europäisches Patentamt

European Patent Office

Office européen des brevets

(11) **EP 2 003 810 A2**

(12) **DEMANDE DE BREVET EUROPEEN**

(43) Date de publication:
**17.12.2008 Bulletin 2008/51**

(51) Int Cl.:
***H04L 1/18*** (2006.01)

(21) Numéro de dépôt: **08104001.6**

(22) Date de dépôt: **16.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **14.06.2007 FR 0755750**

(71) Demandeur: **Alcatel Lucent
75008 Paris (FR)**

(72) Inventeur: **Mobasser, Bahman
78310 Maurepas (FR)**

(74) Mandataire: **Hedarchet, Stéphane
Alcatel Lucent
Intellectual Property & Standards
54 rue La Boétie
75008 Paris (FR)**

(54) **Dispositif de gestion de réception par des terminaux de contenus multimédia transmis par des infrastructures mettant en oeuvre des techniques de transmission différentes**

(57) Un dispositif (D) est dédié au décodage de mot de contrôle codé W'$_k$ transporté dans un canal radio de contrôle montant et relatif au décodage de la valeur d'une variable d'accusé de réception transmise dans un premier canal radio descendant consécutivement au décodage de blocs de symboles de données reçus dans un canal radio de données montant dans un intervalle de temps précédent (TTI$_{k-1}$). Ce dispositif (D) comprend des moyens de traitement (MT) chargés, en cas de réception d'un signal r$_k$ dans le canal radio de contrôle montant dans un intervalle de temps en cours (TTI$_k$), i) d'estimer la probabilité a posteriori que ce signal r$_k$ contienne un mot de contrôle codé w'$_k$ représentant un mot de contrôle w$_k$ à partir de la valeur de la variable d'accusé de réception transmise dans le premier canal radio descendant consécutivement au décodage de blocs dans l'intervalle de temps précédent (TTI$_{k-1}$), et des signaux r$_k$ et r$_{k-1}$ reçus dans les intervalles de temps respectivement en cours (TTI$_k$) et précédent (TTI$_{k-1}$), et ii) de décoder le mot de contrôle codé w'$_k$ (représenté par le signal r$_k$ reçu) en maximisant la probabilité estimée.

FIG.1

EP 2 003 810 A2

**Description**

L'invention concerne les réseaux de communication radio (ou sans fil ou encore par voie d'ondes), et plus précisément le décodage au sein de tels réseaux de mots de contrôle codés.

On entend ici par « réseau de communication radio » tout type de réseau de communication capable de transmettre par voie d'ondes, via une interface air, des signaux représentatifs de blocs de données et des signaux représentant des mots de contrôle codés, Par conséquent, il pourra s'agir aussi bien d'un réseau de téléphonie mobile, comme par exemple un réseau mobile ou cellulaire (GSM, GPRS/EDGE, UMTS ou CDMA2000, ainsi que toutes leurs variantes et tous leurs équivalents), que d'un réseau local sans fil (standards WLAN (« Wireless Local Area Network » - IEEE 802.11, Wi-Fi, ETSI HiperLAN/2), Bluetooth (IEEE 802.15), WiMAX (IEEE 802,16, ETSI HiperMAN) et Zigbee), ou que d'un réseau satellitaire.

Comme le sait l'homme de l'art, certains réseaux (de communication) radio mettent en oeuvre des mécanismes qui nécessitent la transmission sur un canal radio descendant (ou « downlink ») de valeurs d'une variable d'accusé de réception consécutivement au décodage de blocs de symboles de données reçus dans un canal radio de données montant (ou « uplink »). Parmi les mécanismes de ce type, on peut notamment citer le mécanisme de retransmission de blocs de données erronés connu sous l'acronyme anglais H-ARQ (pour « Hybrid Automatic Repeat reQuest »).

Il est rappelé que le mécanisme H-ARQ consiste, chaque fois qu'un équipement de communication radio reçoit, d'un autre équipement de communication radio auquel il est connecté (par exemple une station de base ou un point d'accès ou encore un transpondeur satellitaire), sur un premier canal radio (de transport), un bloc de données incorrect (ou erroné), encodé avec un premier schéma d'encodage et à bits supprimés (ou «poinçonnés» ou encore répétés) selon un premier schéma de suppression (ou poinçonnage (ou « puncturing »), ou répétition de bits (P1), à lui faire transmettre à cette station de base un message de mauvaise réception, appelé « NACK» (abréviation anglaise de «Non Acknowledgment»), de sorte qu'elle lui retransmette dans le premier canal de transport un nouveau bloc de données encodé avec le premier schéma d'encodage et à bits supprimés/répétés selon un second schéma de suppression/répétition (P2). A réception de ce nouveau bloc, l'équipement de communication radio recombine les données qu'il contient à celles contenues dans le bloc précédemment reçu, qu'il avait temporairement stockées dans la mémoire tampon dédiée, permettant ainsi de récupérer des bits erronés.

Lorsque la station de base reçoit dans un second canal radio de données, en provenance de l'équipement de communication radio, un signal radio représentant des blocs de symboles de données, elle transmet à l'équipement de communication radio, dans le premier canal radio, un message de bonne réception de type ACK (abréviation anglaise de « Acknowledgment ») ou de type NACK selon qu'elle a ou non réussi à décoder correctement les symboles reçus. Ce qui différencie ces deux messages (ACK et NACK) c'est la valeur d'une variable d'accusé de réception (ack). A réception d'un message ACK ou NACK, l'équipement de communication radio essaye de décoder la valeur de la variable d'accusé de réception (ack) et transmet à la station de base, dans un second canal radio de contrôle, un signal radio représentant un mot de contrôle codé ($w'_k$) signalant notamment un format de données,

Comme on le comprendra, chaque fois qu'un message est transporté par un premier ou second canal radio, il peut faire l'objet d'une erreur de transmission radio, ce qui peut nuire au bon fonctionnement du mécanisme (ici de type H-ARQ). Il est donc important de détecter si les mots de contrôle codés qui sont décodés par la station de base correspondent à ce qu'ils devraient être en l'absence d'erreur de transmission radio. Pour ce faire, on met en oeuvre au niveau de la station de base un procédé de décodage reposant sur l'estimation de la probabilité d'avoir un mot de contrôle codé ($w'_k$) dans un signal ($r_k$) reçu dans le second canal radio de contrôle dans un intervalle de temps en cours ($TTI_k$) connaissant le signal ($r_k$) reçu dans l'intervalle de temps en cours ($TTI_k$), puis sur le décodage du mot de contrôle codé ($w'_k$) représenté par ce signal ($r_k$) reçu en maximisant la probabilité estimée. Mais, ce procédé de décodage peut être amélioré.

L'invention a donc pour but d'améliorer la situation.

Elle propose à cet effet un procédé dédié au décodage de mot(s) de contrôle codé(s) $w'_k$ transporté(s) dans un second canal radio de contrôle et relatif au décodage de la valeur d'une variable d'accusé de réception transmise dans un premier canal radio (de sens opposé au second canal radio de contrôle) consécutivement au décodage de blocs, de symboles de données reçus dans un second canal radio de données dans un intervalle de temps précédent ($TTI_{k-1}$).

On notera que l'on entend ici par « premier canal radio » un canal radio (par exemple descendant (ou «downlink»)) allant d'un premier équipement de communication radio vers un second équipement de communication radio, et par «second canal radio» un canal radio (par exemple montant (ou « uplink»)) allant du second équipement de communication radio vers le premier équipement de communication radio.

Ce procédé se caractérise par le fait qu'il consiste :

- à estimer la probabilité d'avoir un mot de contrôle $w_k$ représenté par un mot de contrôle codé $w'_k$ contenu dans un signal $r_k$ reçu dans le second canal radio de contrôle dans un intervalle de temps en cours ($TTI_k$) connaissant la

valeur de la variable d'accusé de réception qui a été transmise dans le premier canal radio consécutivement au décodage de blocs dans l'intervalle de temps précédent ($TTI_{k-1}$), et !es signaux $r_k$ et $r_{k-1}$ qui ont été reçus dans les intervalles de temps respectivement en cours ($TTI_k$) et précédent ($TTI_{k-1}$), et
- à décoder le mot de contrôle codé $w'_k$ représenté par le signal $r_k$ reçu en maximisant la probabilité estimée.

Le procédé selon l'invention peut comporter d'autres caractéristiques qui peuvent être prises séparément ou en combinaison, et notamment:

- on peut maximiser la probabilité estimée en utilisant des valeurs stockées dans une table, comme par exemple une table de tabulation de la fonction exponentielle ;
- en variante, on peut maximiser la probabilité estimée en effectuant une approximation de valeur maximale;
- on peut estimer la probabilité en fonction au moins i) d'une valeur estimée de la variable d'accusé de réception qui a été reçue et qui est sujette à une éventuelle erreur de transmission radio, et ii) d'une valeur maximale de débit de données qui peut être utilisée sur le second canal radio de données pour transporter les blocs et qui a été précédemment transmise dans un autre premier canal radio ;

> on peut estimer la probabilité également en fonction de conditions de transfert inter-cellulaires ou de macro diversité inter stations de base ;
o ces conditions de transfert inter-cellulaires peuvent par exemple être fonction du nombre de valeurs de la variable d'accusé de réception qui sont reçues pendant l'intervalle de temps précédent ($TTI_{k-1}$) par l'émetteur des signaux $r_k$ et $r_{k-1}$ et des blocs, et qui proviennent d'équipements différents.

L'invention propose également un dispositif dédié au décodage de mot(s) de contrôle codé(s) $w'_k$ transporté (s) dans un second canal radio de contrôle et relatif au décodage de la valeur d'une variable d'accusé de réception transmise dans un premier canal radio (de sens opposé audit second canal radio de contrôle) consécutivement au décodage de blocs de symboles de données reçus dans un second canal radio de données dans un intervalle de temps précédent ($TTI_{k-1}$)
Ce dispositif de décodage se caractérise par le fait qu'il comprend des moyens de traitement chargés, lorsqu'un signal $r_k$ a été reçu dans le second canal radio de contrôle dans un intervalle de temps en cours ($TTI_k$):

- d'estimer la probabilité que ce signal $r_k$ contienne un mot de contrôle codé $w'_k$ représentant un mot de contrôle $w_k$ à partir de la valeur de la variable d'accusé de réception qui a été transmise dans le premier canal radio consécutivement au décodage de blocs dans l'intervalle de temps précédent ($TTI_{k-1}$), et des signaux $r_k$ et $r_{k-1}$ qui ont été reçus dans les intervalles de temps respectivement en cours ($TTI_k$) et précédent ($TTI_{k-1}$), et
- de décoder le mot de contrôle codé $w'_k$ représenté par le signal $r_k$ reçu en maximisant la probabilité estimée.

Le dispositif selon l'invention peut comporter d'autres caractéristiques qui peuvent être prises séparément ou en combinaison, et notamment:

- ses moyens de traitement peuvent être chargés de maximiser la probabilité estimée en utilisant des valeurs stockées dans une table, comme par exemple une table de tabulation de la fonction exponentielle stockée dans une mémoire;
- en variante, ses moyens de traitement peuvent être chargés de maximiser la probabilité estimée en effectuant une approximation de valeur maximale;
- ses moyens de traitement peuvent être chargés d'estimer la probabilité en fonction au moins i) d'une valeur estimée de la variable d'accusé de réception qui a été reçue et qui est sujette à une éventuelle erreur de transmission radio, et ii) d'une valeur maximale de débit de données qui peut être utilisée sur le second canal radio de données pour transporter les blocs et qui a été précédemment transmise dans un autre premier canal radio.

> ses moyens de traitement peuvent être chargés d'estimer la probabilité également en fonction de conditions de transfert inter-cellulaires ou de macro diversité inter stations de base ;
les conditions de transfert inter-cellulaires peuvent par exemple être fonction du nombre de valeurs de variable d'accusé de réception qui ont été reçues pendant l'intervalle de temps précédent ($TTI_{k-1}$) par l'émetteur des signaux $r_k$ et $r_{k-1}$ et des blocs et qui proviennent d'équipements différents,

L'invention propose également un récepteur radio, par exemple pour une station de base d'un réseau d'accès radio d'un réseau de communication radio, et comprenant un dispositif de décodage du type de celui présenté ci-avant.
L'invention est particulièrement bien adaptée, bien que de façon non exclusive, au décodage de mots de contrôle codés $w'_k$ d'un mécanisme de retransmission de blocs de données erronés de type dit H-ARQ.

D'autres caractéristiques et avantages de l'invention apparaîtront à l'examen de la description détaillée ci-après, et des dessins annexés, sur lesquels :

- la figure 1 illustre de façon très schématique les quatre canaux reliant un équipement de communication radio à une station de base (équipée d'un dispositif de décodage selon l'invention) et impliqué dans un mécanisme H-ARQ,
- la figure 2 lustre de façon très schématique et fonctionnelle un exemple de réalisation d'un récepteur équipé d'un dispositif de décodage selon l'invention,
- la figure 3 illustre de façon très schématique et fonctionnelle un état, correspondant: à une valeur (p2) non nulle d'un deuxième champ (P2 (ici égal à RSN)), et des transitions associées, et
- la figure 4 illustre de façon très schématique et fonctionnelle un état, correspondant à une valeur (p2) nulle d'un deuxième champ (P2 (ici égal à RSN)), et des transitions associées.

Les dessins annexés pourront non seulement servir à compléter l'invention:, mais aussi contribuer à sa définition, le cas échéant.

L'invention a pour objet de permettre le décodage, au sein d'un réseau de communication radio, de mots de contrôle codés.

Dans ce qui suit, on considère à titre d'exemple non limitatif que le réseau (de communication) radio (ou sans fil) est un réseau de téléphonie mobile (disposant d'une interface radio), comme par exemple un réseau mobile ou cellulaire UMTS (de préférence selon la version 6). Mais, l'invention n'est pas limitée à ce type de réseau radio. Elle concerne en effet tout type de réseau de communication capable de transmettre par voie d'ondes, via une interface air, des signaux représentatifs de blocs de données et des signaux représentant des mots de contrôle codés relatifs au décodage de la valeur d'une variable d'accusé de réception. Par conséquent, ïl pourra s'agir aussi bien d'un réseau de téléphonie mobile, comme par exemple un réseau mobile ou cellulaire (GSM, GPRS/EDGE ou CDMA2000, ainsi que toutes leurs variantes et tous leurs équivalents), que d'un réseau local sans fil (standards WLAM (« Wireless Local Area Network » - IEEE 802.11, WI-FI, ETSI HiperLAN/2), Bluetooth (IEEE 802.15), WIMAX (IEEE 802.16, ETSI HiperMAN) et Zigbee), ou que d'un réseau satellitaire.

Par ailleurs, on considère dans ce qui suit, à titre d'exemple non limitatif, que la variable d'accusé de réception (ack) est produite par un mécanisme de retransmission de blocs de données erronés de type H-ARQ (Hybrid Automatic Repeat reQuest). Mais, l'invention n'est pas limitée à ce type de mécanisme. Elle concerne en effet tout type de mécanisme nécessitant la transmission sur un premier canal radio (par exemple descendant (ou « downlink »)) de valeurs d'une variable d'accusé de réception consécutivement au décodage de blocs de symboles de données reçus dans un second canal radio de données (par exemple montant (ou « uplink »)).

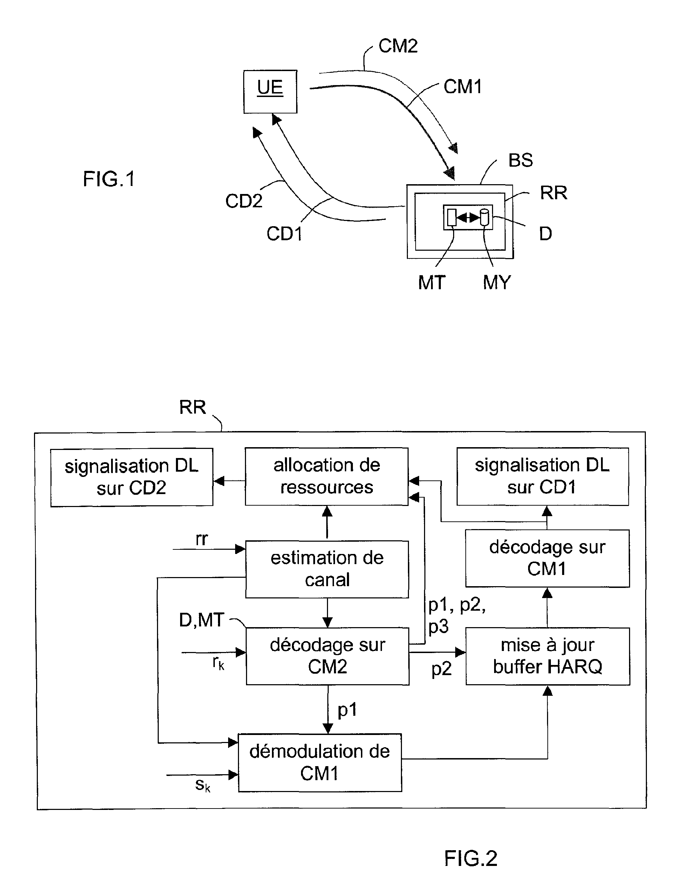

Le mécanisme H-ARQ a été présenté dans la partie introductive, Dans le cas d'un réseau UMTS (version 6), et plus précisément dans le contexte d'une transmission E-DCH (pour « Enhanced - Dedicated CHannel »), il implique, comme illustré sur la figure 1, l'établissement de quatre canaux entre des premier SB et second UE équipements de communication radio.

Dans ce qui suit on considère à titre d'exemple non limitatif que les quatre canaux sont établis entre un premier équipement de communication radio de type station de base SB du réseau d'accès radio du réseau UMTS et un second équipement de communication radio de type téléphone mobile UE. Par conséquent, un canal radio descendant allant de la station de base SB vers le téléphone mobile UE est un premier canal radio, tandis qu'un un canal radio montant allant du téléphone mobile UE vers la station de base SB est un second canal radio,

Les quatre canaux précités sont définis ci-après compte tenu des choix illustratifs précédents.

Un canal radio (de transport) de données montant CM (second canal radio), appelé E-DPDCH (pour « Enhanced - Dedicated Physical Data CHannel »), sert à transmettre des signaux $S_k$ représentatifs de blocs de symboles de données codés de l'équipement de communication radio UE vers la station de base SB.

Un canal radio de contrôle montant CM2 (autre second canal radio), appelé E-DPCCH (pour « Enhanced - Dedicated Physical Control CHannel »), sert à transmettre des signaux $r_k$ représentatifs de mots de contrôle codés $w'_k$ de l'équipement de communication radio UE vers la station de base SB.

On entend ici par « signal $r_k$ » un signal en bande de base transmis dans un intervalle de temps $TTI_k$, de dimension égale à 150 symboles de durée égale à 66,67 $\mu$s (dans le cas d'un TTI de 10 ms) ou de dimension égale à 30 symboles (dans le cas d'un TTI de 2 ms), et constitué d'un mot de contrôle codé $w'_k$ et d'un bruit additionnel $n_k$ que l'on suppose être un bruit blanc gaussien (soit $r_k = w'_k + n_k$).

Un mot de contrôle codé $w'_k$ résulte d'un codage, par exemple de type Reed Muller, d'un mot de contrôle $W_k$ constitué par exemple de 10 bits d'information pouvant être divisés en trois groupes (ou champs) P1 à P3.

Un premier groupe (ou champ) P1, appelé ETFC (pour « Enhanced Transport Format Combination »), contient sept bits qui définissent le format utilisé pour transmettre les blocs de symboles de données. Ce format ne change pas entre deux retransmissions successives d'un même bloc, mais il peut changer entre deux transmissions successives de blocs différents. Ce format est limité par une valeur maximale (ETFC_set) de débit de données que l'équipement de communication radio UE est autorisé à utiliser pour transférer les blocs de symboles de données ($s_k$) vers la station de base SB.

Un deuxième groupe (ou champ) P2, appelé RSN (pour « Retransmission Séquence Number »), contient deux bits qui définissent l'indice de retransmission d'un bloc de symboles de données. La valeur de cet indice est égale à 0 (zéro) lors de la première transmission d'un bloc, puis à 1 (un) lors de la première retransmission dudit bloc (consécutive à un premier message NACK), et ainsi de suite jusqu'à la valeur 3 (trois) lors de la troisième retransmission dudit bloc (consécutive à un troisième message NACK). Cette dernière valeur se répète par la suite pour les éventuelles retransmissions suivantes.

Un troisième groupe (ou champ) P3, appelé HB (pour « Happy Bit »), contient un bit qui est considéré comme une variable aléatoire indiquant si l'utilisateur est satisfait ou non du service offert.

En d'autres termes, on peut écrire la relation suivante :$W_k = (ETFC + RSN + HB)$ ou plus exactement (d'une façon arithmétique) $w_k = (ETFC + RSN \times 2^7 + HB \times 2^9)$ ou encore $w_k = (p1 + p2 \times 2^7 + p3 \times 2^9)$, où p1, p2 et p3 sont les valeurs respectives de ETFC, RSN et HB dans l'intervalle de temps $TTI_K$. considéré. On a également la relation $w'_k = codage(w_k)$, le codage étant par exemple de type Reed Muller.

Le troisième des quatre canaux précités est un premier canal radio descendant CD1 (premier canal radio), appelé E-HICH (pour « Enhanced - HARQ Indicator grant CHannel »), servant à transmettre de la station de base SB vers l'équipement de communication radio UE des messages d'accusé de réception de type ACK ou NACK (contenant notamment la valeur d'une variable d'accusé de réception ack) consécutivement au décodage par le récepteur RR de la station de base SB de blocs de symboles de données reçus sous la forme d'un signal $s_{k-1}$ dans le canal radio de données montant CM1 (ici E-DPDCH) pendant un intervalle de temps précédent ($TTI_{k-1}$). Il est rappelé que le récepteur RR de la station de base SB génère un message ACK lorsque la valeur du champ CRC (pour « Cyclic Redundancy Check ») est vraie (ce qui indique que les symboles ont été correctement décodés), tandis qu'elle génère un message NACK lorsque la valeur du champ CRC est fausse (ce qui indique que les symboles n'ont pas été correctement décodés).

Enfin, le quatrième des quatre canaux précités est un second canal radio descendant CD2 (autre premier canal radio), appelé E-AGCH (pour « Enhanced - Absolute Grant CHannel »), servant à transmettre de la station de base SB vers l'équipement de communication radio UE des informations signalant notamment la valeur maximale (ETFC_set) du débit de données P1 que l'équipement de communication radio UE est autorisé à utiliser pour transférer les blocs de symboles de données ($s_k$) vers la station de base SB sur le canal radio de données montant CM1 (ici E-DPDCH).

Dans ce qui suit, on entend par «équipement de communication radio » (ou « équipement d'utilisateur ») UE tout terminal de communication capable d'échanger des données par voie d'ondes, sous la forme de signaux, avec un autre équipement d'utilisateur ou un équipement de son réseau d'accès radio de rattachement, comme par exemple une station de base SB, Il pourra donc s'agir, par exemple, d'un téléphone mobile (ou cellulaire), ou d'un assistant personnel numérique (ou PDA) ou d'un ordinateur portable équipé d'un dispositif de communication radio.

L'invention concerne spécifiquement le procédé de décodage du canal radio de contrôle montant CM2 (ici E-DPCCH) qui est mis en oeuvre dans un dispositif de décodage D du récepteur RR d'une station de base SB.

On a représenté schématiquement et fonctionnellement sur la figure 2, un exemple de réalisation d'un récepteur RR équipé d'un dispositif de décodage D selon l'invention,

Un tel récepteur RR comprend principalement :

- un module d'estimation de canal recevant un signal de référence DPCCH rr et chargé de récupérer le rythme fréquentiel et temporel (et d'estimer l'amplitude du canal) pour l'estimation des symboles (si cette dernière est réalisée de manière cohérente),
- un dispositif de décodage D chargé de décoder chaque mot de contrôle codé $w'_k$ représenté par le signal $r_k$ reçu dans le canal radio de contrôle montant CM2 (ici E-DPCCH), en fonction d'informations fournies par le module d'estimation de canal, et délivrant sur trois sorties respectivement p1 (valeur du champ ETFC du mot de contrôle $w_k$), p2 (valeur du champ RSN de $w_k$), et p3 (valeur du champ HB de $w_k$) et p1, p2 et p3 (valeurs respectives des champs ETFC, RSN et HB de $w_k$),
- un module de démodulation de données chargé de démoduler le signal $s_k$ reçu dans le canal radio de données montant CM1 (ici E-DPDCH), en fonction d'informations fournies par le module d'estimation de canal, et délivrant sur une sortie les blocs de symboles de données à décoder,
- un module de mise à jour d'un « buffer » (mémoire tampon) du mécanisme HARQ, chargé de conserver les sorties de l'intervalle temporel précédent (ou écoulé) si le CRC associé était faux, afin d'effectuer une recombinaison lors de l'intervalle temporel suivant avant le décodage (si le CRC associé suivant est vrai le buffer est purgé) en fonction de la valeur p2 (du champ P2 (ici RSN)) et des blocs de symboles de données à décoder,
- un module de décodage chargé de décoder les blocs de symboles de données codés issus de la démodulation du signal $s_k$ reçu dans le canal radio de données montant CM1 (ici E-DPDCH), et délivrant sur une sortie les blocs de symboles de données décodés,
- un premier module de signalisation chargé de générer le message ACK ou NACK devant être transmis à l'équipement de communication radio UE, selon que les blocs de symboles de données ont été ou non correctement décodés,

- un module d'allocation de ressources (E-DCH) chargé d'allouer aux téléphones mobiles UE connectés à la station de base SB un certain niveau de ressources en fonction d'informations fournies par le module d'estimation de canal, de p1, p2 et p3 (valeurs respectives des champs ETFC, RSN et HB de $w_k$), et d'autres informations des couches supérieures, et délivrant sur une sortie des instructions désignant le format maximum que l'équipement de communication radio UE est autorisé à utiliser,

- un second module de signalisation chargé de générer le message qui contient la valeur ETFC_set (fonction des instructions reçues du module d'allocation de ressources) et qui doit être transmis à l'équipement de communication radio UE.

Comme cela est illustré sur la figure 1, le dispositif de décodage D, selon l'invention (chargé de mettre en oeuvre le procédé de décodage selon l'invention) comporte principalement un module de traitement MT. Ce dernier est chargé d'intervenir chaque fois que le récepteur RR reçoit un signal $r_k$ dans le canal radio de contrôle montant CM2 (ici E-DPCCH) pendant un intervalle de temps en cours $TTI_k$.

Cette intervention est tout d'abord destinée à estimer la probabilité a posteriori $p(W_k|ack,r_k,r_{k-1})$ que le signal $r_k$ reçu contienne un mot de contrôle codé $W'_k$ représentant un mot de contrôle $W_k$ connaissant la valeur de la variable d'accusé de réception ack qui a été transmise par sa station de base SB dans le premier canal radio descendant CD1 (ici E-HICH) consécutivement au décodage de bloc (de symboles de données) dans l'intervalle de temps précédent $TI_{k-1}$, et les signaux $r_k$ et $r_{k-1}$ reçus dans les intervalles de temps respectivement en cours $TTI_k$ et précèdent $TTIk-1$. Puis, une fois que le module de traitement MT a estimé la probabilité a posteriori $p(w_k|ack,r_k,r_{k-1})$, il décode le mot de contrôle codé $w'_k$ qui est représenté par le signal $r_k$ reçu en maximisant la probabilité a posteriori estimée $p(w_k|ack,r_k,r_{k-1})$.

L'invention repose en effet sur le fait que des transmissions successives d'un mot de contrôle codé $w'_k$ sur un canal radio de contrôle montant CM2 ne sont pas indépendantes, mais dépendent du champ CRC décodé côté réception, L'indice de retransmission du mécanisme HARQ dépend en effet du nombre de blocs (de symboles de données) qui n'ont pas été correctement décodés (et donc qui ont fait l'objet d'un message NACK), tandis que le schéma de modulation et de codage (MCS) doit rester constant entre deux retransmissions successives d'un même bloc en l'absence d'erreur de transmission radio.

L'estimation de la probabilité a posteriori $p(w_k|ack,r_k,r_{k-1})$ peut par exemple se faire en fonction au moins d'une valeur estimée ack_ue de la variable d'accusé de réception ack qui a été reçue par l'équipement radio UE et qui est sujette à une éventuelle erreur de transmission radio, et de la valeur maximale ETFC_set de débit de données que le récepteur RR a fixé pour l'équipement radio UE et qui détermine le format maximal qu'il est autorisé à utiliser sur le canal radio de données montant CM1 (ici E-DPDCH) pour transporter les blocs codés, Il est rappelé que cette valeur maximale ETFC_set est transmise de la station de base SB vers l'équipement de communication radio UE sur le second canal radio descendant CD2 (ici E-AGCH). Par ailleurs, il est rappelé que la variable ack peut prendre soit la valeur ACK (dans le cas d'une bonne réception), soit la valeur NACK (dans le cas d'une mauvaise réception).

De préférence, le module de traitement MT estime la probabilité a posteriori $p(w_k|ack,r_k,r_{k-1})$ également en fonction de conditions de transfert inter-cellulaires, appelées SHO (pour « Soft HandOver »). Comme on le verra plus loin, les conditions de transfert inter-cellulaires (SHO) sont fonction du nombre de valeurs de la variable d'accusé de réception ack que l'équipement radio UE peut recevoir pendant l'intervalle de temps précédent $TTI_{k-1}$ d'une ou plusieurs stations de base SB, Il est en effet rappelé qu'un équipement radio UE peut être pendant un de temps $TTI_k$ donné en liaison radio avec une ou plusieurs stations de base SB.

On va maintenant détailler un exemple de formalisme mathématique permettant au module de traitement MT de procéder à l'estimation d'une probabilité a posteriori $p(w_k|ack,r_k,r_{k-1})$. Cette dernière peut s'écrire comme suit :

$$p(w_k|ack,r_k,r_{k-1}) = \sum_{ack\_ue,w_{k-1}} p(w_k,w_{k-1},ack\_ue|ack,r_k,r_{k-1}),$$

où ack__ue est la valeur estimée de la variable d'accusé de réception ack reçue.
ce qui peut se réécrire comme suit en utilisant, par exemple, plusieurs fois la règle dite de Baye :

$$p(w_k|ack,r_k,r_{k-1}) \alpha \sum_{ack\_ue,w_{k-1}} p(r_k,r_{k-1}|ack\_ue,ack,w_k,w_{k-1})p(w_k,w_{k-1},ack\_ue|ack),$$

et finalement

$$p(w_k|ack,r_k,r_{k-1}) \alpha \sum_{ack\_ue,w_{k-1}} p(r_k,r_{k-1}|ack\_ue,ack,w_k,w_{k-1}) p(w_k,w_{k-1}|ack\_ue,ack) p(ack\_ue|ack)$$

$$(1).$$

La première probabilité (la plus à gauche) qui apparaît dans la somme de la relation (1) peut être écrite comme suit, compte tenu du fait que les signaux $r_{k-1}$ et $r_k$ sont indépendants de ack_ue et ack :

$$p(r_k,r_{k-1}|ack\_ue,ack,w_k,w_{k-1}) = p(r_k,r_{k-1}|w_k,w_{k-1}),$$

ce qui peut se réécrire :

$$p(r_k,r_{k-1}|ack\_ue,ack,w_k,w_{k-1}) = \alpha \exp\left(-\frac{\|r_k-w_k\|^2}{\sigma^2} - \frac{\|r_{k-1}-w_{k-1}\|^2}{\sigma^2}\right) \quad (2),$$

où a indique une proportionnalité et $\sigma^2$ représente la puissance du bruit.

La deuxième probabilité qui apparaît dans la somme de la relation (1) peut être écrite comme suit, compte tenu du fait que chaque mot de contrôle $w_k$ ne dépend que de la valeur ack_ue de la variable ack qui est estimée par l'équipement radio UE :

$$p(w_k,w_{k-1}|ack\_ue,ack) = p(w_k,w_{k-1}|ack\_ue)$$
$$= p(w_k|ack\_ue,w_{k-1}) p(w_{k-1}|ack\_ue) \quad (3).$$

La valeur estimée ack_ue pendant l'intervalle de temps $TTI_{k-1}$ ne dépendant pas de l'un des trois groupes de bits P1 à P3 (ou ETFC, RSN et HB) qui constituent ensemble un mot de contrôle $w_k$, elle n'est donc pas utile. Par conséquent, la seconde probabilité (la plus à droite) qui apparaît dans la partie droite de la relation (3) peut se réécrire comme suit :

$$p(w_{k-1}|ack\_ue) = p(w_{k-1}) = \frac{1}{8.card(ETFC\_set)} \quad (4),$$

et donc la relation (3) peut se réécrire comme suit :

$$p(w_k,w_{k-1}|ack\_ue,ack) = \frac{1}{8.card(ETFC\_set)} p(w_k|ack\_ue,w_{k-1}) \quad (5).$$

La relation (5) peut être encore plus développée si l'on utilise les relations (14) à (17) données ci-après, qui résultent des relations (6) à (13) découlant d'un modèle de codeur de mots de contrôle w destinés à emprunter le canal radio de contrôle CM2 (ici E-DPCCH).

On considère dans ce qui suit que les variables ETFC(w), RSN(w) et HB(w) représentent respectivement les trois groupes (ou champs) P1 à P3 (ou ETFC, RSN et HB) d'un mot de contrôle w.

La probabilité conditionnelle d'avoir dans l'équipement radio UE des valeurs de champ ETFC pour le mot de contrôle $w_k$ qui différent entre deux retransmissions successives, sachant qu'un message NACK a été reçu, est donnée par la relation :

$$p(ETFC(w_k) \neq ETFC(w_{k-1}) | NACK) = 0 \quad (6).$$

La probabilité conditionnelle d'avoir dans l'équipement radio UE une même valeur de champ ETFC pour le mot de contrôle $w_k$ entre deux retransmissions successives, sachant qu'un message NACK a été reçu, est donnée par la relation :

$$p(ETFC(w_k) = ETFC(w_{k-1}) | NACK) = 1 \quad (7).$$

La probabilité conditionnelle d'avoir dans l'équipement radio UE n'importe quelle valeur de champ ETFC pour le mot de contrôle $w_k$ entre deux retransmissions successives, sachant qu'un message ACK a été reçu, est donnée par la relation :

$$p(ETFC(w_k) = ETFC_i | ACK) = 1/card(ETFC\_set) \quad (8).$$

La probabilité conditionnelle d'avoir dans l'équipement radio UE une valeur de champ RSN nulle pour le mot de contrôle $w_k$ entre deux retransmissions successives, sachant qu'un message ACK a été reçu, est donnée par la relation :

$$p(RSN(w_k) = 0 | ACK) = 1 \quad (9).$$

La probabilité conditionnelle d'avoir dans l'équipement radio UE une valeur de champ RSN non nulle pour le mot de contrôle $w_k$ entre deux retransmissions successives, sachant qu'un message ACK a été reçu, est donnée par la relation :

$$p(RSN(w_k) \neq 0 | ACK) = 0 \quad (10).$$

La probabilité conditionnelle d'avoir dans l'équipement radio UE une valeur de champ RSN incrémentée d'une unité pour le mot de contrôle $w_k$ entre deux retransmissions successives, sachant qu'un message NACK a été reçu, est donnée par la relation :

$$p(RSN(w_k) = RSN(w_{k-1}) + 1 | NACK) = 1 \quad (11).$$

La probabilité conditionnelle d'avoir dans l'équipement radio UE une même valeur de champ RSN pour le mot de contrôle $w_k$ entre deux retransmissions successives, sachant qu'un message NACK a été reçu, est donnée par la relation :

$$p(RSN(w_k) \neq RSN(w_{k-1}) + 1 | NACK) = 0 \quad (12).$$

Les probabilités d'avoir des valeurs de champ HB pour le mot de contrôle $w_k$ égales à 1 ou 0 sont toutes les deux égales à ½:

$$p(HB = 1) = p(HB = 0) = \frac{1}{2} \quad (13).$$

Des relations (6) à (13) données ci-avant on peut déduire les probabilités suivantes pour la réception d'un message ACK dans l'équipement radio UE.

La probabilité que la valeur du champ RSN du k-ième mot de contrôle $w_k$ soit nulle, connaissant le mot de contrôle précédent $w_{k-1}$ et sachant que le message ACK a été démodulé par l'équipement radio UE, est donnée par la relation :

$$p\left(w_k = w \in \{RSN(w) = 0\}\middle|w_{k-1}, ACK\right) = \frac{1}{2.card(ETFC\_set)} \quad (14).$$

La probabilité que la valeur du champ RSN du k-ième mot de contrôle $w_k$ soit non nulle, connaissant le mot de contrôle précédent $w_{k-1}$ et sachant que le message ACK a été démodulé par l'équipement radio UE, est donnée par la relation :

$$p\left(w_k = w \notin \{RSN(w) = 0\}\middle|w_{k-1}, ACK\right) = 0 \quad (15).$$

Des relations (6) à (13) données ci-avant on peut déduire les probabilités suivantes pour la réception d'un message NACK dans l'équipement radio UE.

La probabilité que les valeurs du champ HB des (k-1)-ième $w_{k-1}$ et k-ième $w_k$, mots de contrôle diffèrent, connaissant le mot de contrôle précédent $W_{k-1}$ et sachant que le message NACK a été démodulé par l'équipement radio UE, est donnée par la relation :

$$p\left(w_k - w_{k-1} = (000000000\ HB)\middle|w_{k-1}, NACK\right) = \frac{1}{2} \quad (16)$$

La probabilité que pour les (k-1)-ième $w_{k-1}$ et k-ième $w_k$ mots de contrôle il n'y ait pas que les valeurs du champ HB qui diffèrent, connaissant le mot de contrôle précédent $w_{k-1}$ et sachant que le message NACK a été démodulé par l'équipement radio UE, est donnée par la relation :

$$p\left(w_k - w_{k-1} \neq (000000000 HB)\middle|w_{k-1}, NACK\right) = 0 \quad (17).$$

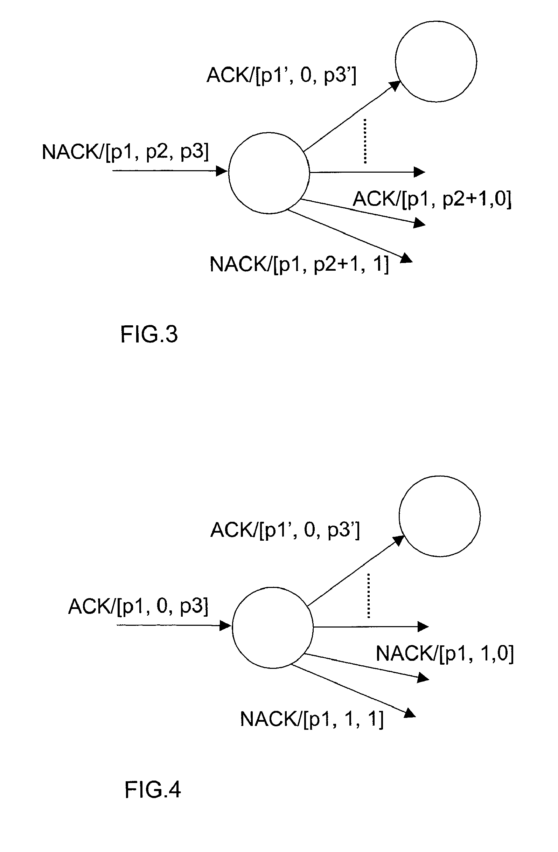

On notera, comme cela est schématiquement illustré sur les figures 3 et 4, que le codeur peut être représenté par un diagramme d'état à 1024 états (soit $2^{10}$ du fait que le nombre de bits constituant un mot de contrôle $w_k$ est égal à 10), Plus précisément, on a représenté sur la figure 3 un état qui correspond à une valeur (p2) non nulle du champ RSN (P2), et des transitions associées, et on a représenté sur la figure 4 un état qui correspond à une valeur (p2) nulle du champ RSN (P2), et des transitions associées.

La troisième probabilité (la plus à droite), qui apparaît dans la somme de la relation (1), dépend des conditions SHO précitées. En effet, l'équipement radio UE va considérer que le bloc de symboles de données qu'il a transmis dans l'intervalle de temps précédent TTIk-1 a été correctement décodé dès lors que l'une au moins des stations de base SB avec lesquelles il est en liaison lui a transmis un message ACK dans un premier canal radio descendant CD1 (ici E-HICH).

Si l'équipement radio UE n'a une liaison radio qu'avec une seule station de base SB, et si l'on considère que $p(ack\_ue = ACK|ack = NACK)$ ou $p(ack\_ue = NACK|ack = ACK)$ représente la probabilité $p_{UE}$ d'avoir une erreur de transmission radio sur le premier canal radio descendant CD1 (ici E-HICH), alors on a :

$$p(ack\_ue = ACK|ack = ACK) = p(ack\_ue = NACK|ack = NACK) = 1 - p_{UE} \quad (18).$$

Si l'équipement radio UE a des liaisons radio avec N (N ≥2) stations de base $SB_i$ (avec i = 0 à N-1 et $SB_0$ étant une station de base ayant transmis un message ACK), il détermine les N valeurs $ack\_UE_j$ et dérive de celles-ci une valeur composite ack_UE égale, à ACK lorsque l'une au moins des N valeurs ack_UE$_i$ est égale à ACK. La probabilité d'avoir une valeur ack_UE égale à ACK dans l'équipement radio UE, connaissant la valeur ack$_0$ transmise par la station de base SB$_0$, peut alors s'écrire comme suit :

$$p\big(ack\_ue = ACK | ack_0\big) = p\big(ack\_ue_0 = ACK \ or...ack\_ue_{N-1} = ACK | ack_0\big)$$

$$= \sum_{k=0}^{N-1}(-1)^k\left( \sum_{\{0\}\subset\sigma_k}\prod_{i_0,...i_{k-1}} p_{i_k}(ACK) + \sum_{\{0\}\subset\sigma_k} p(ACK|ack_0)\prod_{i_0,...i_{k-1}\neq 0} p_{i_k}(ACK)\right)$$

(19),

où

- $p(ACK|ack_0)$ est la probabilité d'avoir une valeur ack_UE égale à ACK sur la liaison avec la station de base SB$_0$, laquelle est définie par :

$$\begin{cases} p(ACK|ACK) = 1 - p_{UE} \\ p(ACK|NACK) = p_{UE} \end{cases} \quad (20),$$

et

$$p_k(ACK) = p(ACK|ack_k)$$
$$= p_k(ACK|NACK)p_k(NACK) + p_k(ACK|ACK)p_k(ACK) \quad (21),$$
$$= bler_k(1 - p_{UE}) + (1 - bler_k)p_{UE}$$

où la variable bler (pour « block error rate ») désigne ici le taux d'erreur de bloc de symboles de données pour la k-ième station de base SB$_k$ (un message ACK (respectivement NACK) est transmis lorsqu'il n'y a pas d'erreur (respectivement lorsqu'il y a une erreur) sur le champ CRC dans la k-ième station de base SB$_k$) et si l'on considère que $p(ack\_ue_i|ack_0)$ = $p(ack\_ue_i)$ lorsque l'indice i n'est pas nul.

Les probabilités (20) et (21) peuvent être stockées dans une mémoire du dispositif de décodage D en fonction des bler et p$_{UE}$ ciblés.

De la même façon on peut obtenir la probabilité d'avoir une valeur ack_UE égale à NACK dans l'équipement radio UE, connaissant la valeur ack$_0$ transmise par la station de base SB$_0$,. Cette probabilité peut s'écrire comme suit :

$$p\big(ack\_ue = NACK | ack_0\big) = 1 - p\big(ack\_ue = ACK | ack_0\big) \quad (22).$$

En utilisant les relations (2), (5) et (18) à (21), on peut alors réécrire la relation (1) comme suit dans le cas où ack=ACK ;

$$p(w_k|ACK,r_k,r_{k-1}) = p(ACK|ACK)\sum_{w_{k-1}} \exp\left(-\frac{\|r_k - w_k\|^2}{\sigma^2} - \frac{\|r_{k-1} - w_{k-1}\|^2}{\sigma^2}\right)p(w_k|ACK,w_{k-1})$$

$$+ p(NACK|ACK)\sum_{w_{k-1}} \exp\left(-\frac{\|r_k - w_k\|^2}{\sigma^2} - \frac{\|r_{k-1} - w_{k-1}\|^2}{\sigma^2}\right)p(w_k|NACK,w_{k-1})$$

$$(23).$$

La somme du premier terme de la relation (23) peut être encore plus développée si l'on utilise les relations (14) à (17), et en notant qu'il y a quelques événements de probabilité nulle :

$$\sum_{w_{k-1}} \exp\left(-\frac{\|r_k - w_k\|^2}{\sigma^2} - \frac{\|r_{k-1} - w_{k-1}\|^2}{\sigma^2}\right)p(w_k|ACK,w_{k-1}) =$$

$$\frac{1}{2.card(ETFC\_set)} \exp\left(-\frac{\|r_k - w_k\|^2}{\sigma^2}\right)\sum_{w \in RSN(w)=0} \exp\left(-\frac{\|r_{k-1} - w\|^2}{\sigma^2}\right)$$

$$(24)$$

La somme du second terme de la relation (23) peut être encore plus développée si l'on utilise les relations (14) à (17), et en notant qu'il y a quelques événements de probabilité nulle :

$$\sum_{w_{k-1}} \exp\left(-\frac{\|r_k - w_k\|^2}{\sigma^2} - \frac{\|r_{k-1} - w_{k-1}\|^2}{\sigma^2}\right)p(w_k|NACK,w_{k-1}) =$$

$$\frac{1}{2}\exp\left(-\frac{\|r_k - w_k\|^2}{\sigma^2}\right)\left(\exp\left(-\frac{\|r_{k-1} - w_k\|^2}{\sigma^2}\right) + \exp\left(-\frac{\|r_{k-1} - \overline{w}_k\|^2}{\sigma^2}\right)\right)$$

$$(25)$$

où $\overline{w}_k$ est le même mot de contrôle que $w_k$ mais avec le troisième groupe P3 (HB) inversé.

La maximisation de la probabilité a posteriori estimée $p(W_k|ack,r_k,r_{k-1})$ se fait alors en maximisant le vecteur suivant par rapport au mot de contrôle $w_k$ (appartenant à ETFC_set) et en effectuant l'identification

$$p_{k,i} = -\frac{\|r_i - w_k\|^2}{\sigma^2}$$ (dans le cas où ack=ACK) :

$$p(w_k|NACK,r_k,r_{k-1}) =$$
$$\exp(p_{k,k})\left[p(NACK|ACK)\sum_{w_j} \exp(p_{i,k-1}) + p(ACK|ACK)(\exp(p_{k,k-1}) + \exp(\overline{p}_{k,k-1}))\right] \quad (26)$$

En reprenant pour le cas ack=NACK le même raisonnement que celui utilisé pour le cas ack=ACK, la maximisation de la probabilité a posteriori estimée $p(w_k|ack,r_k,r_{k-1})$ se fait en maximisant le vecteur suivant par rapport au mot

de contrôle $w_k$ (appartenant à ETFC_set) :

$$p(w_k|NACK,r_k,r_{k-1}) = \\ \exp(p_{k,k})\left[p(ACK|NACK)\sum_{w \in RSN(w)=0} \exp(p_{i,k-1}) + p(NACK|NACK)\left(\exp(p_{k,k-1}) + \exp(\bar{p}_{k,k-1})\right)\right]$$

$$(27).$$

Dans le cas ack=ACK comme dans le cas ack=NACK le module de traitement MT doit effectuer le calcul des exponentielles qui sont contenues dans les relations (26) ou (27). Mais, pour éviter d'avoir à calculer numériquement ces exponentielles le module de traitement MT peut mettre en oeuvre des solutions alternatives.

Ainsi, on peut par exemple stocker dans une mémoire MY du dispositif D une table de tabulation de la fonction exponentielle, Dans ce cas, le module de traitement MT accède à la mémoire MY pour déterminer les valeurs qui correspondent aux expressions des exponentielles apparaissant dans la maximisation.

Dans une variante, le module de traitement MT peut par exemple effectuer une approximation de valeur maximale en approximant une somme d'exponentielles par le maximum de l'exponentielle dans cette somme.

Le dispositif de décodage D selon l'invention, et notamment son module de traitement MT et son éventuelle mémoire MY, peuvent être réalisés sous la forme de circuits électroniques, de modules logiciels (ou informatiques), ou d'une combinaison de circuits et de logiciels.

L'invention permet d'améliorer les performances de la démodulation au niveau du récepteur radio RR, si bien que cela peut permettre de réduire la puissance de transmission radio et/ou d'améliorer la qualité de la démodulation sur le canal radio de données montant (par exemple E-DPCCH).

Dans ce qui précède on a décrit à titre d'exemple illustratif une situation dans laquelle le premier équipement de communication radio est une station de base et le second équipement de communication radio est un téléphone mobile UE. Mais, l'invention s'applique de la même façon à la situation inverse.

L'invention ne se limite pas aux modes de réalisation de dispositif de décodage, récepteur radio RR, station de base SB et procédé de décodage décrits ci-avant, seulement à titre d'exemple, mais elle englobe toutes les variantes que pourra envisager l'homme de l'art dans le cadre des revendications ci-après.


**Revendications**

**1.** Procédé de décodage de mot de contrôle codé $w'_k$ transporté dans un second canal radio de contrôle et relatif au décodage de la valeur d'une variable d'accusé de réception (ack) transmise dans un premier canal radio, de sens opposé audit second canal radio de contrôle, consécutivement au décodage de blocs de symboles de données reçus dans un second canal radio de données montant dans un intervalle de temps précédent ($TTI_{k-1}$), **caractérisé en ce qu'**il consiste i) à estimer la probabilité a posteriori d'avoir un mot de contrôle $w_k$ représenté par un mot de contrôle codé $w'_k$ contenu dans un signal $r_k$ reçu dans ledit second canal radio de contrôle dans un intervalle de temps en cours ($TTI_k$) connaissant la valeur de ladite variable d'accusé de réception (ack) transmise dans ledit premier canal radio consécutivement au décodage de blocs dans ledit intervalle de temps précédent ($TTI_{k-1}$), et les signaux $r_k$ et $r_{k-1}$ reçus dans lesdits intervalles de temps respectivement en cours ($TTI_k$) et précédent ($TTI_{k-1}$), et ii) à décoder le mot de contrôle codé $w'_k$ représenté par ledit signal $r_k$ reçu en maximisant ladite probabilité estimée.

**2.** Procédé selon la revendication 1, **caractérisé en ce que** l'on maximise ladite probabilité estimée en utilisant des valeurs stockées dans une table.

**3.** Procédé selon la revendication 2, **caractérisé en ce que** ladite table est une table de tabulation de la fonction exponentielle,

**4.** Procédé selon la revendication 1, **caractérisé en ce que** l'on maximise ladite probabilité estimée en effectuant une approximation de valeur maximale,

**5.** Procédé selon l'une des revendications 1 à 4, **caractérisé en ce que** l'on estime ladite probabilité en fonction au moins i) d'une valeur estimée (ack_ue) de la variable d'accusé de réception (ack) reçue et sujette à une éventuelle erreur de transmission radio, et ii) d'une valeur maximale (ETFC_set)de débit de données pouvant être utilisée sur ledit second canal radio de données pour transporter lesdits blocs, précédemment transmise dans un autre premier canal radio.

6. Procédé selon la revendication 5, **caractérisé en ce que** l'on estime ladite probabilité également en fonction de conditions de transfert inter-cellulaires (SHO).

7. Procédé selon la revendication 6, **caractérisé en ce que** lesdites conditions de transfert inter-cellulaires (SHO) sont fonction du nombre de valeurs de variable d'accusé de réception (ack) reçues pendant ledit intervalle de temps précédent ($TTI_{k-1}$) par l'émetteur desdits signaux $r_k$ et $r_{k-1}$ et desdits blocs en provenance d'équipements différents.

8. Dispositif de décodage de mot de contrôle codé $w'_k$ transporté dans un second canal radio de contrôle et relatif au décodage de la valeur d'une variable d'accusé de réception (ack) transmise dans un premier canal radio, de sens opposé audit second canal radio de contrôle, consécutivement au décodage de blocs de symboles de données reçus dans un second canal radio de données dans un intervalle de temps précédent ($TTI_{k-1}$), **caractérisé en ce qu'**il comprend des moyens de traitement (MT) agencés, en cas de réception d'un signal $r_k$ dans ledit second canal radio de contrôle dans un intervalle de temps en cours ($TTI_k$), i) pour estimer la probabilité a posteriori que ce signal $r_k$ contienne un mot de contrôle codé $w_k$ représentant un mot de contrôle $w_k$ à partir de la valeur de ladite variable d'accusé de réception (ack) transmise dans ledit premier canal radio consécutivement au décodage de blocs dans ledit intervalle de temps précédent ($TTI_{k-1}$), et des signaux $r_k$ et $r_{k-1}$ reçus dans lesdits intervalles de temps respectivement en cours ($TTI_k$) et précédent ($TTI_{k-1}$), et ii) pour décoder le mot de contrôle codé $w'_k$ représenté par ledit signal $r_k$ reçu en maximisant ladite probabilité estimée.

9. Dispositif selon la revendication 8, **caractérisé en ce que** lesdits moyens de traitement (MT) sont agencés pour maximiser ladite probabilité estimée en utilisant des valeurs stockées dans une table.

10. Dispositif selon la revendication 9, **caractérisé en ce que** ladite table est une table de tabulation de la fonction exponentielle stockée dans une mémoire (MY),

11. Dispositif selon la revendication 8, **caractérisé en ce que** lesdits moyens de traitement (MT) sont agencés pour maximiser ladite probabilité estimée en effectuant une approximation de valeur maximale,

12. Dispositif selon l'une des revendications 8 à 11, **caractérisé en ce que** lesdits moyens de traitement (MT) sont agencés pour estimer ladite probabilité en fonction au moins i) d'une valeur estimée (ack_ue) de la variable d'accusé de réception (ack) reçue et sujette à une éventuelle erreur de transmission radio, et ii) d'une valeur maximale (ETFC_set) de débit de données pouvant être utilisée sur ledit second canal radio de données pour transporter lesdits blocs, précédemment transmise dans un autre premier canal radio.

13. Dispositif selon la revendication 12, **caractérisé en ce que** lesdits moyens de traitement (MT) sont agencés pour estimer ladite probabilité également en fonction de conditions de transfert inter-cellulaires (SHO).

14. Dispositif selon la revendication 13, **caractérisé en ce que** lesdites conditions de transfert inter-cellulaires (SHO) sont fonction du nombre de valeurs de variable d'accusé de réception (ack) reçues pendant ledit intervalle de temps précédent ($TTI_{k-1}$) par l'émetteur desdits signaux $r_k$ et $r_{k-1}$ et desdits blocs en provenance d'équipements différents.

15. Récepteur radio (RR) pour un réseau de communication radio, **caractérisé en ce qu'**il comprend un dispositif de décodage (D) selon l'une des revendications 8 à 14.

16. Utilisation du procédé de décodage, du dispositif de décodage (D) et du récepteur radio (RR) selon l'une des revendications précédentes pour le décodage de mots de contrôle codés $w'_k$ de contrôle d'un mécanisme de retransmission de blocs de données erronés de type dit H-ARQ.

FIG.1

FIG.2

ACK/[p1', 0, p3']

NACK/[p1, p2, p3]

ACK/[p1, p2+1,0]

NACK/[p1, p2+1, 1]

FIG.3

ACK/[p1', 0, p3']

ACK/[p1, 0, p3]

NACK/[p1, 1,0]

NACK/[p1, 1, 1]

FIG.4